Europäisches Patentamt

European Patent Office

Office européen des brevets

(11) Publication number: **0 175 026**
**B1**

## EUROPEAN PATENT SPECIFICATION

(45) Date of publication of patent specification: **28.02.90**

(21) Application number: **84306368.6**

(22) Date of filing: **18.09.84**

(51) Int. Cl.⁵: **G 01 V 1/20, G 01 H 9/00**

(54) Marine seismic sensor.

(43) Date of publication of application:
**26.03.86 Bulletin 86/13**

(45) Publication of the grant of the patent:
**28.02.90 Bulletin 90/09**

(84) Designated Contracting States:
**BE CH DE FR GB IT LI NL SE**

(56) References cited:
**EP-A-0 027 540**
**CA-A-1 124 384**
**GB-A-2 083 221**
**US-A-3 148 351**
**US-A-4 078 223**

(73) Proprietor: **Western Atlas International, Inc.**
**10,001 Richmond Avenue**
**Houston Texas 77042 (US)**

(72) Inventor: **Savit, Carl H.**
**Western Geophysical Co. of America P.O. Box 2469**
**Houston Texas 77252 (US)**

(74) Representative: **Godsill, John Kenneth et al**
**Haseltine Lake & Co. Hazlitt House 28**
**Southampton Buildings Chancery Lane**
**London WC2A 1AT (GB)**

Courier Press, Leamington Spa, England.

## Description

This invention relates to the use of pressure sensors to determine the direction of propagation of seismic pressure waves in a body of water.

In seismic exploration at sea, a plurality of pressure sensors are encased in a long tubular plastic streamer which may extend for 1.6 to 3.2 km. A ship tows the streamer through the water at a desired depth. The earth layers beneath the sea are insonified by suitable means. The sonic waves are reflected from the earth layers below, to return to the surface of the water in the form of pressure waves. The pressure waves are detected by the pressure sensors and are converted to electrical signals. The electrical signals are transmitted to the towing ship via transmission lines that are contained within the streamer.

The reflected sound waves not only return directly to the pressure sensors where they are first detected, but those same reflected sound waves are reflected a second time from the water surface and back to the pressure sensors. The surface-reflected sound waves of course, are delayed by an amount of time proportional to twice the depth of the pressure sensors and appear as secondary or "ghost" signals. Because the direct and surface-reflected sound waves arrive close together in time—a few milliseconds—they tend to interfere with one another. It is desirable therefore to determine the direction of propagation of the sound waves so that the upward- and downward-propagating waves may be more readily sorted out during data processing.

It is possible to position two individual sensors in a fixed vertical array. It would of course then be easy to identify the direction of propagation of the sonic waves from the measured difference in time that a particular wavelet arrives at the respective sensors that make up the vertical array. See for example, U.S. Patent 3,952,281. That method however requires two separate hydrophone cables. Since such cables cost about a half-million dollars each, that course of action would be decidedly uneconomical.

Assuming that sufficiently compact sensors could be obtained, it would be possible to mount a substantially vertical array of sensors inside the same streamer, a few centimeters or inches apart. But a seismic streamer cable twists and turns as it is towed through the water. If a substantially vertical sensor array were to be mounted inside the streamer, there would no way to determine which one of the sensors in the array is "up", assuming conventional detectors are used. It is also important to be able to identify unwanted waves travelling horizontally from scatterers within or near the bottom of the water layer.

As is well known, a water-pressure gradient exists between two points spaced vertically apart in a body of water. If then, there were some way that the hydrostatic pressure gradient between two vertically-disposed detectors could be measured, the uppermost detector of an array could be identified.

A pressure gradient transducer for a directional hydrophone system is disclosed in US—A—3148351. The transducer is for indicating its orientation relative to magnetic north.

The present invention relates to a method for marine seismic exploration comprising pulling an elongate member through a body of water in a substantially horizontal configuration, the member having a plurality of sensor arrays disposed within and along it for producing data indicative of seismic waves, each array comprising at least three sensors displaced radially in said elongate member in different directions, with the sensors in each array being substantially in a plane orthogonal to the elongate member, and the method further comprising providing the data in the form of electrical signals.

U.S. Specification No. 4078223 describes such a method, with the possible exception that it is not clear whether the sensors are disposed in said orthogonal plane. Moreover, this method does not relate to what we call marine exploration, i.e. where an elongate member is towed through a body of water at a finite depth above the bed of that body of water. Instead, it is a method for use on 'land' (which may include the bed of a shallow lake or the like) using geophones which can only detect signals propagating substantially along their axes of sensitivity and which are directionally insensitive. The type of geophone disclosed was operative only with its axis within a few degrees of the vertical, so that the method renders only one sensor operational at a time.

According to one aspect of the present invention, the method is characterised in that it is carried out with the elongate member towed through the body of water at a preselected finite depth above the bed of that body of water, the sensors being of a type to respond to the magnitude and direction of pressure thereon so as to provide data having AC and DC components indicative of the seismic waves and of ambient hydrostatic pressures respectively, the method further comprising separating the AC and DC components of the data into electrical signals and processing the electrical signals to resolve the AC and DC components to determine the direction of propagation of said seismic waves with respect to three-dimensional space.

US Specification No. 4078223 describes apparatus for carrying out its method, the apparatus including an elongate member containing at least one sensor array, said array including at least three radially disposed sensors to produce data signals relating to detected seismic waves, the sensors of the or each array being disposed in different directions substantially in a plane orthogonal relative to the elongate member, means for transmitting an actuating signal to said sensors and means for transmitting data signals from the sensors to a recording system.

According to a second aspect of the present invention, such an apparatus is characterised in that, for use with the elongate member towed through a body of water in a substantially horizontal configuration at a preselected finite depth above the bed of that body of water, the sensors are of a type to respond to the magnitude and direction of pressure thereon so as to be operable to produce data signals related to differential hydrostatic pressure and sensed pressure transients due to seismic waves, the apparatus further comprising means for separating the data signals into electrical DC components representative of the hydrostatic pressure and electrical AC components representative of the transients due to seismic waves, and means for determining from the components the direction of propagation of the detected seismic waves with respect to three-dimensional space.

Conventional marine detectors or hydrophones use piezo-electric ceramic wafers as the active element. The wafers are generally mounted to operate in the bender mode. Transient pressure changes due to acoustic waves flex the wafers to generate an AC charge current. The wafers are also sensitive to hydrostatic pressure, but the DC charge due to hydrostatic pressure leaks off rapidly through associated circuitry.

A preferred form of the invention uses sensors of fiber-optic type. Canadian Patent No. 1124384 uses such sensors. It discloses a sensor array, the sensor array comprising two pressure sensors of fiber-optic type displaced radially from an axis of the array and disposed in substantially the same plane orthogonal to said axis, means for transmitting an actuating signal to the sensors and means for transmitting data signals from said sensors. Such an array as such is not suitable for implementing the present invention.

Thus, according to a further aspect of the invention defined in claim 13, there are at least three of said sensors of fiber-optic type arranged with their axes extending substantially along different radii of the array such that said sensors will produce data signals comprising DC components representative of the magnitude of hydrostatic pressure and AC components representative of transients due to seismic waves.

Reference has been made above in describing the invention to AC and DC signals. The term DC as used herein applies to the component of the signals generated by the hydrostatic pressure. With fiber optic type sensors, the different hydrostatic pressures exerted on two sensors can be distinguished by measuring the phase shift between the sensors' interference fringes. This results in a signal of constant polarity referred to as the "DC component". However, the marine environment is not static. Waves and swells are present which continually change the absolute hydrostatic pressure detected, but nevertheless this is regarded as DC herein. In contrast, the AC component relates to the transient pressure pulses due to seismic waves.

A preferred embodiment of the present invention seeks to provide a plurality of arrays of pressure sensors in an inexpensive streamer that is capable of detecting AC transient pressure signals due to seismic waves and to identify their direction of arrival in three dimensional space with reference to the vertical whose direction is sensed by measuring the DC bias due to the vertical hydrostatic pressure gradient.

In accordance with such an embodiment, a plurality of optical-fiber sensor arrays are mounted interiorly of a seismic streamer at a like plurality of sensor stations distributed at intervals along the stramer. Each sensor array consists of a set of at least three and preferably four coils of monomodal optical fiber that act as pressure sensors. If four coils are used, the four sensor-coils may be mounted ninety degrees apart around the inner surface of the streamer skin. A laser or LED launches a coherent beam of monochromatic light into each set of sensor coils via an input transmission line. Transient and static pressures at the sensor coils modulate the light beam. The modulated output light beam from each sensor coil of a set is delivered by at least one optical fiber to a multiple-input photo detector where the beam from each individual sensor coil is separately combined with a reference beam. The photo-detector converts the resulting optical beat signals to AC electrical signals representative of the polarity and amplitude of transient seismic signals impinging upon the sensor coils.

Preferably, separate modulated output light beams are combined with each other at a photo-detector which converts the phase difference between the light beams to a DC electrical signal having a magnitude representative of the DC bias due to the hydrostatic pressure gradient between the sensor coils. The AC seismic signals and the DC bias signals are transmitted to a data processor where the direction of propagation of incoming seismic waves may be resolved.

The laser, photo-detectors, data processor and other optical and electronic circuitry can be mounted aboard a towing ship. The input and modulated output light beams are transmitted to the sensor coils through optical-fiber bundles.

Preferably, each set of sensor-coils is provided with a separate laser or LED, photo detectors, and a beam splitter to provide a reference beam all mounted together in a single module at the sensor stations. The modulated light beams are resolved as to the AC and DC signal components which are converted to electrical signals. The electrical signals are transmitted to the data processor by wire line.

For a better understanding of this invention, reference may be made to the appended detailed description and the drawings wherein:

Figure 1 shows a boat towing through the water a streamer containing a plurality of optical-fiber sensor coils at corresponding sensor stations;

Figure 2 is a longitudinal cross section of the streamer at a typical sensor station;

Figure 3 is a cross section of the streamer along line 3—3; and

Figure 4 illustrates schematically, the optical circuitry.

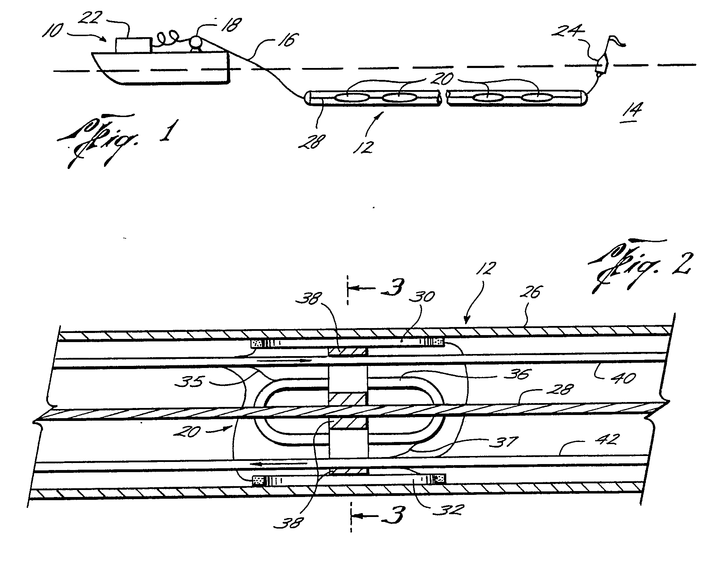

Referring now to Figure 1, there is shown a ship 10 towing a seismic streamer 12 through a body of water 14. Streamer 12 is towed by an armored lead-in 16 which includes stress members, armoring and it may include one or more optical fiber bundles. When not in use, lead-in 16 and streamer 12 are stored on a reel 18 at the stern of boat 10. Streamer 12 contains several sets 20 of optical-fiber sensor coils, one set per sensor station. As will be seen later, each set 20, includes three but preferably four such sensor coils. An optical equipment package 22 such as a laser, photo detectors, optical couplers and data processing equipment is mounted aboard ship 10. Equipment package 22 will be described at length later. A tail buoy or drogue 24 marks the end of the streamer 12. One known system, which however employs only one sensor per sensor station is shown in U.S. Patent 4,115,753.

Streamer 12 consists essentially of a long tubular plastic skin made of polyvinyl chloride, polyurethane or the like, about 76 mm in diameter, closed at both ends. A complete streamer may be several kilometers long but, for convenience in handling, it may be divided into a number of detachable sections. The streamer is filled with a substantially incompressible fluid transparent to seismic waves for coupling external pressures in the internally-mounted sensors. A stress member 28, usually a stainless steel cable, is threaded through the entire streamer to prevent rupture due to towing stress.

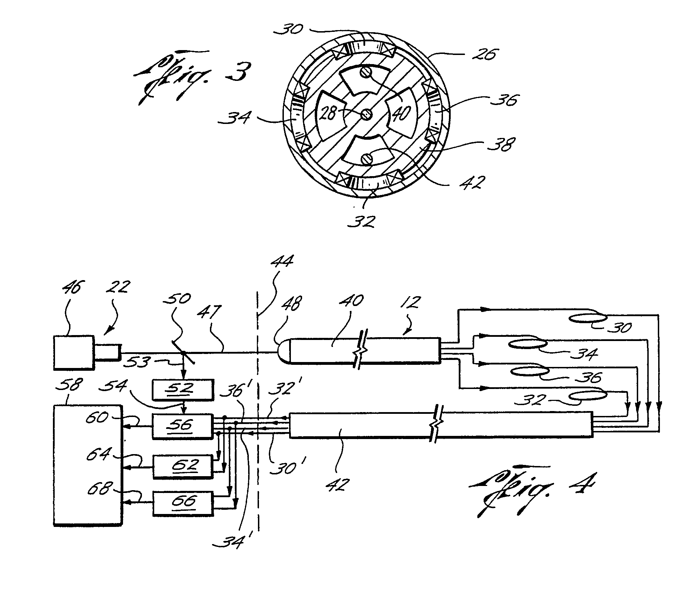

Referring to Figure 2 which is a longitudinal cross section of a portion of the cable at a sensor station, and Figure 3 which is a cross section at 3—3 of Figure 2, a sensor unit 20 consists of a set of at least three and preferably four optical-fiber sensor coils 30, 32, 34, 36 having an elongate configuration that are mounted inside skin 26 of streamer 12 parallel to the longitudinal axis. For sake of example, let it be assumed that there are four such coils. There are thus two pairs of sensor coils such as 30 and 32, 34 and 36. The members of each pair are mounted diametrically opposite to one another at 90° intervals, parallel to and as far away from the longitudinal axis of the streamer as practicable. Preferably the sensor coils are held in place by a plastic spider such as 38. Since the longitudinal axis of the streamer, when under low, is substantially horizontal, the set of sensor coils forms a two-dimensional array having a vertical extent comparable to the inner diameter of the tube 26.

The sensor coils are fashioned from many turns of a monomodal glass fiber having a low light loss per unit of length. The dimensions of the coil and the number of turns depend upon the total length of optical fiber required.

It is well known that when an optical fiber is subjected to a compression, the index of refraction and/or the elongation changes. The phase shift between a light beam transmitted through a reference fiber and a beam transmitted through an active fiber subjected to compression is a function of the fiber length and the incremental change in the index of refraction and/or elongation or both. See for example, U.S. Patent 4,320,475. For a practical pressure sensor, a fiber length of about 100 meters is required for the active fiber. For an elongated fiber coil loop about two meters long and two or three centimeters wide, about 25 turns would be necessary. It is necessary for the sensor coils to be mounted so that flexing or movement of the streamer skin will not distort the shape of the coils. Such distortion would of course introduce spurious signals to the system.

Two optical-fiber bundles 40 and 42 are threaded through the streamer and the respective spiders that support the sensor coils at each sensor station. Bundle 40 is the outbound transmission link through which is launched an input light beam from a transmitting laser (not shown in Figure 2), to each sensor coil. Bundle 40 may be a single fiber with provision for coupling its transmitted light to each sensor coil or it may consist of a bundle of single fibers, one fiber being assigned to each sensor coil. In effect the coils have an essentially common light-beam input. For example, coil 36 has an input fiber lead 35 and an output fiber lead 37. The other coils have similar input and output leads. Because of the small size and light weight of the fibers, several hundred fibers can be packaged into a single bundle without becoming unduly bulky.

Fiber bundle 42 is the return transmission link for the sensor-coil output light beams. There is one output fiber for every sensor-coil. Therefore, four output fibers are necessary to service each sensor station. The free end of fiber bundle 42 that exits the streamer and lead-in at the ship, is coupled to optical processing circuitry now to be described.

The preferred method of operation of this invention may be gleaned from Figure 4 which schematically illustrates the optical processing circuitry. In Figure 4, all components to the left of dashed line 44 may be mounted on ship 10 as part of the processing package 22. Components to the right of dashed line 44 are made a part of streamer 12.

A laser or LED 46, operating preferably in the near infra-red portion of the spectrum launches a coherent light beam 47 into an optical coupler 48 that couples the light beam into the fiber or fibers that make up fiber bundle 40. The optical coupler 48 acts as an essentially common input to the fiber bundle. The light is transmitted to the optical-fiber sensor coils where the light beams are modulated by transient seismic pressure waves and the ambient hydrostatic pressure. The modulated light beams return from the sensor coils, through fiber bundle 42, to processing unit 22. In Figure 4, only one typical sensor station is shown for simplicity, but it should be understood that fiber bundles 40 and 42 may be extended to service additional sensor stations.

In optical equipment package 22, a beam splitter 50 directs a part 53 of the laser beam 47 into a suitable optical delay module 52 whose output becomes a reference beam 54. Optical delay module 52 retards beam 53 to match the length of the optical path between beam splitter 50 and the sensor coils 30, 32, 34, 36 of any given sensor station. A different delay module is associated with each of the plurality of sensor stations to compensate for the differing optical path lengths.

The modulated light beams return from sensor coils 30, 32, 34, 36 through corresponding optical fibers 30', 32', 34', 36'. The beams are individually combined with reference beam 54 by suitable photo-detectors, of any desired type, in multiple-input combiner module 56. The resulting beat frequency is converted to an AC electrical wave train representative of the transient pressure variations due to seismic waves. The electrical signals from the four sensors may be multiplexed into data processor 58 over line 60.

The DC bias, due to a water-pressure gradient, between the light beams in a first pair of diametrically opposite sensor coils such as 30 and 32 is measured by combining the two output light beams in a photo-detector 62. The phase shift between the two beams is converted to a DC electric bias signal having sign and magnitude that is delivered to data processor 58 over line 64. Similarly the DC bias between the light outputs of the second pair of coils, 34 and 36, is measured by photo detector 66. The resulting electrical output is transmitted to data processor 58 over line 68. From the magnitude of the two bias signals, the physical orientation of the sensor coils, relative to a vertical plane, can be resolved by well known mathematical algorithms. In data processor 58, since we know now of the physical orientation of the sensor coils in the vertical plane, the directions of propagation of the respective seismic pressure waves can be resolved by measuring the arrival-time differences of a seismic wavelet at the respective sensor coils of the array.

In the above discussion, I have disclosed a means for resolving the magnitude and direction, within a vertical plane perpendicular to the axis of the cable, of seismic waves propagating through water. The direction of propagation in three-dimensional space can of course be determined by measuring the time difference between the arrival times of the same seismic wavelet at two or more selected consecutive sensor stations along the cable by means well known to the art. The longitudinal time differences may be combined with the vertical time differences by simple vector addition to resolve the direction of propagation in three axes.

I have described my invention in terms of a specific configuration. However, those skilled in the art may consider other equally effective arrangements without departing from the scope of the appended claims. For example, each of the individual sensor arrays could be provided with its own laser, beam splitter, photo-detectors etc., all of which could be included in individual modules mounted in the streamer at each sensor station. The electrical analogs of the measured phase shifts of the modulated and reference light beams would be transmitted to data processor 58, aboard ship 10, by wire line.

## Claims

1. A method for marine seismic exploration comprising pulling an elongate member through a body of water in a substantially horizontal configuration, the member having a plurality of sensor arrays disposed within and along it for producing data indicative of seismic waves, each array comprising at least three sensors displaced radially in said elongate member in different directions with the sensors in each array being substantially in a plane orthogonal to the elongate member, and the method further comprising providing the data in the form of electrical signals, characterised in that the method is carried out with the elongate member towed through the body of water at a preselected finite depth above the bed of that body of water, the sensors being of a type to respond to the magnitude and direction of pressure thereon so as to provide data having AC and DC components indicative of the seismic waves and of ambient hydrostatic pressures respectively, the method further comprising separating the AC and DC components of the data into electrical signals and processing the electric signals to resolve the AC and DC components to determine the direction of propagation of said seismic waves with respect to three-dimensional space.

2. The method of claim 1, wherein in each array pressure sensors substantially uniformly distributed around the longitudinal axis of said elongate member are used.

3. The method of claim 1 or 2, wherein in each array optical-fiber pressure sensors (30, 32, 34) for receiving and modulating a coherent monochromatic light beam are used, thereby providing a plurality of output light beams that are modulated in response to transient pressure variations due to seismic waves and in response to hydrostatic pressure.

4. The method of claim 3, and comprising deriving AC signal components representative of said transient pressure variations by separately combining said modulated light beams with a reference light beam, and for each sensor array, combining the separate modulated light beams with each other to derive DC signal components representative of the magnitude of the hydrostatic pressure differential between said sensors.

5. The method of any one of claims 1 to 4, and comprising measuring the horizontal and vertical arrival-time differences of the transient pressure variations at selected horizontally and radially disposed sensors making up the respective sensor arrays, and combining said AC components, said DC components and said arrival times for resolving the direction of propagation, in three-dimensional space, of the detected seismic waves.

6. An apparatus for carrying out the method of any one of the preceding claims and including an elongate member (12) containing at least one sensor array (20), said array (20) including at least three radially disposed sensors (30, 32, 34) to produce data signals relating to detected seismic waves, the sensors (30, 32, 34, 36) of the or each array (20) being disposed in different direction substantially in a plane orthogonal relative to the elongate member (12) means (40) for transmitting an actuating signal to said sensors (30, 32, 34) and means (42) for transmitting data signals from the sensors to a recording system (22), characterised in that for use with the elongate member towed through a body of water in a substantially horizontal configuration at a preselected finite depth above the bed of that body of water, the sensors (30, 32, 34, 36) are of a type to respond to the magnitude and direction of pressure thereon so as to be operable to produce data signals related to differential hydrostatic pressure and sensed pressure transients due to seismic waves, the apparatus further comprising means (56, 62) for separating the data signals into electrical DC components representative of the hydrostatic pressure and electrical AC components representative of the transients due to seismic waves, and means (58) for determining from the components the direction of propagation of the detected seismic waves with respect to three-dimensional space.

7. The apparatus of claim 6, wherein a plurality of sensor arrays in spaced apart along the longitudinal axis of said elongate member (12) each said array (20) including four optical fiber sensors (30, 32, 34, 36), said sensors being uniformly distributed about the longitudinal axis of said elongate member (12) in a plane substantially perpendicular to the longitudinal axis of said member, said actuating-signal transmitting means (40) being an optical fiber and said data-signal transmitting means (42) including at least one optical fiber.

8. The apparatus of claim 7, and comprising a laser (46) for launching a coherent monochromatic beam of radiation into the transmission means (40) for modulation by the sensors of the respective arrays (20) in response to pressure variations due to seismic waves and to differential hydrostatic pressure, a detector means (56) of the recording system for receiving separately the modulated light beams from the respective sensors (30, 32, 34, 36) of each array (20) over the data transmitting means (42) and for combining said modulated light beams with a reference light beam (54) to determine the AC signal components of said modulated light beam that are due to pressure transients caused by seismic waves.

9. The apparatus according to claim 7 or 8 and comprising photo detectors (62, 66) for combining respectively the modulated light beams from a pair of the sensors (30 and 32) and from another pair of the sensors (34 and 36) to determine the DC components of said modulated light beams that are representative of differential hydrostatic pressure at the respective sensors.

10. The apparatus according to any one of claims 7 to 9, wherein all of the sensors of all of the respective arrays (20) have a common source of coherent radiation, each sensor being arranged to provide a separate modulated output beam, and said data transmission means (42) comprising a bundle of separate optical fibers.

11. The apparatus according to any one of claims 7 to 9, wherein all of the sensors within a given array (20) have a common radiation source but each separate array has a separate radiation source, all of the sensors of all of the arrays being arranged to provide separate modulated output beams.

12. The apparatus according to any one of claims 6 to 11, wherein said elongate member (12) is a closed container having a volume of fluid contained therewithin for coupling the internally-mounted sensors with external pressure variations.

13. A sensor array (20) for use in an apparatus according to claim 6, the sensor array (20) comprising pressure sensors of fiber-optic type displaced radially from an axis of the array (20) and disposed in substantially the same plane orthogonal to said axis, means (40) for transmitting an actuating signal to the sensors and means (42) for transmitting data signals from said sensors, characterised in that there are at least three of said sensors (30, 32, 34, 31) of fiber-optic type arranged with their axes extending substantially along different radii of the array such that said sensors will produce data signals comprising DC components representative of the magnitude of hydrostatic pressure and AC components representative of transients due to seismic waves.

**Patentansprüche**

1. Verfahren zur seismischen Exploration auf See, mit den Verfahrensschritten:

Schleppen eines im wesentlichen horizontal auszurichtenden langen Körpers durch eine Wassermasse, welcher Körper eine Vielzahl von Sensorreihen aufweist, die innerhalb und längs des Körpers angeordnet sind zur Erzeugung von seismischen Wellen entsprechenden Daten, und bei dem jede Reihe mindestens drei innerhalb des Körpers in verschiedene radiale Richtungen ausgerichtete Sensoren enthält und jede Reihe in einer zur Körperlängsachse im wesentlichen senkrechten Ebene angeordnet ist und

Bereitstellen der Daten in Form von elektrischen Signalen, dadurch gekennzeichnet, daß

das Verfahren mittels des in einer bestimmten Tiefe oberhalb des Wasserbodens durch die Wassermasse geschleppten langen Körpers durchgeführt wird, die Sensoren auf die Stärke und die Richtung des auf sie wirkenden Druckes ansprechen und Daten bereitstellen, welche die seismischen Wellen bzw, den hydrostatischen Umgebungsdruck anzeigende Wechselstrom-(AC-) und Gleichstrom-(DC-) Komponenten enthalten,

bei dem Verfahren des weiteren die AC- und DC-Komponenten der Daten in elektrische Signale separiert werden und daß

die elektrischen Signale zum Analysieren der AC- und DC-Komponenten verarbeitet werden, um die Ausbreitungsrichtung der seismischen Wellen im dreidimensionalen Raum zu bestimmen.

2. Verfahren nach Anspruch 1, bei dem jeder Reihe Drücksensoren verwendet werden, die im wesentlichen gleichmäßig um die Längsachse des langen Körpers angeordnet sind.

3. Verfahren nach Anspruch 1 oder 2, bei dem in jeder Reihe Optikfaser-Drucksensoren (30, 32, 34) verwendet werden, die einen kohärenten monochromatischen Lichtstrahl empfangen und mnodulieren zur Bereitstellung von einer Vielzahl von Ausgangs-Lichtstrahlen, die in Abhängigkeit der aufgrund von Seismikwellen entstandenen transienten Druckänderungen und in Abhängigkeit des hydrostatischen Druckes moduliert sind.

4. Verfahren nach Anspruch 3, mit den Verfahrensschritten:

Gewinnung der die transierten Druckänderungen darstellenden AC-Komponenten durch separate Vereinigung der modulierten Lichtstrahlen mit einem Bezugs-Lichtstrahl und

Vereinigen der separaten modulierten Lichtstrahlen miteinander für jede Sensorreihe zur Gewinnung der die Stärke der hydrostatischen Druckdifferenz zwischen den Sensoren repräsentierenden DC-Komponenten.

5. Verfahren nach einem der Ansprüche 1 bis 4, mit den Verfahrensschritten:

Messen der horizontalen und vertikalen Ankunftszeitunterschiede der transienten Druckänderungen an ausgewählten horizontal und radial angeordneten Sensoren, die die entsprechenden Sensorreihen bilden, und

Kombinieren der AC-Komponenten, der DC-Komponenten und der Ankunftszeiten zum Bestimmmen der Ausbreitungsrichtung der erfaßten seismischen Wellen im dreidimensionalen Raum.

6. Vorrichtung zur Durchführung des Verfahrens nach einem der vorstehenden Ansprüche mit:

einem langen Körper (12) mit mindestens einer Sensorreihe (20), die mindestens drei radial angeordnete Sensoren (30, 32, 34) enthält zur Erzeugung von seismischen Wellen entsprechenden Datensignalen, wobei die Sensoren (30, 32, 34, 36) einer jeden Reihe (20) innerhalb einer bezüglich des langen Körpers (12) orthogonalen Ebene in unterschiedlichen Richtungen angeordnet sind,

Mittels (40) zur Übertragung eines Aktivierungssignals zu den Sensoren (30, 32, 34) und mit:

Mitteln (42) zum Übertragen der Datensignale von den Sensoren zu einem Aufzeichungssystem (22), dadurch gekennzeichnet, daß

für den in einer bestimmten Tiefe oberhalb des Wasserbodens durch die Wassermasse zu schleppenden langen körpers Sensoren (30, 32, 34, 36) verwendet werden, die auf die Stärke und die Richtung des auf sie wirkenden Drucks ansprechen zur Erzeugung der Datensignale aufgrund des hydrostatischen Druckdifferenz, die durch die seismischen Wellen ausgelöst werden, und der erfaßten Drucktransienten,

die Vorrichtung des weiteren,

Einrichtungen (56, 62) zum Trennen der Datensignale in den hydrostatischen Druck repräsentierende elektrische DC-Komponenten und in die Drucktransienten, die durch die seismischen Wellen entstehen, darstellende elektrische AC-Komponenten und

Mittel (58) enthält zur Bestimmung der Ausbreitungsrichtung der erfaßten seismischen Wellen im dreidimensionalen Raum aus den Komponenten.

7. Vorrichtung nach Anspruch 6, bei der eine Vielzahl von Sensorreihen entlang der Längsachse des langen Körpers (12) voneinander beabstandet angeordnet sind, bei der zu jeder Reihe (20) vier faseroptische Sensoren (30, 32, 34, 36) gehören, die in einer im wesentlichen zur Längsachse des Körpers senkrechten Ebene gleichmäßig um die Längsachse des langen Körpers (12) verteilt sind, und bei der das Mittel (40) zur Übertragung des Aktivierungssignals eine optische Faser ist und die Einrichtung (42) zur Übertragung des Datensignals mindestens eine optische Faser enthält.

8. Vorrichtung nach Anspruch 7, mit

einem Laser (46), der einen kohärenten monochromatischen Lichtstrahl in das Mittel (40) zur Übertragung einstrahlt, welcher durch die Sensoren der entsprechenden Reihe (20) in Abhängigkeit von der durch die seismischen Wellen bewirkten Druckänderungen und in Abhängigkeit vom hydrostatischen Druckdifferenzwert moduliert wird,

einem Detektor (56) im Aufzeichnungssystem, der über die Einrichtung (42) zur Datenübertragung die modulierten Lichtstrahlen von den entsprechenden Sensoren (30, 32, 34, 36) jeder Reihe (20) aufnimmt und diese modulierten Lichtstrahlen mit einem Referenzlichstrahl (54) vereinigt zur Bestimmung der AC-Komponenten des modulierten Lichtstrahls, die abhängig sind von den durch die seismischen Wellen bewirkten Drucktransienten.

9. Vorrichtung nach Anspruch 7 oder 8, mit

Photodetektoren (62, 66), welche die entsprechenden modulierten Lichtstrahlen eines Sensorpaars (30 und 32) und eines weiteren Sensorpaares (34 und 36) vereinigen zur Bestimmung der DC-Komponente der modulierten Lichtstrahlen, welche die hydrostatische Druckdifferenz an den entsprechenden Sensoren representieren.

10. Vorrichtung nach einem der Ansprüche 7 bis 9, bei der allen Sensoren aller Reihen (20) eine gemeinsame Quelle für kohärente Strahlung zugeordnet ist, bei der jeder Sensor so angeordnet ist, daß er einen separat modulierten Strahl ausgibt und bei der die Einrichtung (42) zur Datenübertragung ein Bündel einzelner optische Fasern aufweist.

11. Vorrichtung nach einem der Ansprüche 7 bis 9, bei der allen Sensoren innerhalb einer bestimmten Reihe (20) eine gemeinsame Strahlungsquelle zugeordnet ist, aber jede einzelne Reihe eine getrennte Strahlungsquelle enthält und bei der sämtliche Sensoren aller Reihen derart angeordnet sind, daß sie getrennte modulierte Strahlen ausgeben.

12. Vorrichtung nach einem der Ansprüche 6 bis 11, bei der der lange Körper (12) ein geschlossener Behälter ist und ein Fluid enthält zur Übertragung der äußeren Druckänderungen auf die in seinem Inneren befestigten Sensoren.

13. Sensorreihenanordnung (20) zur Verwendung in einer Vorrichtung nach Anspruch 6 mit

faseroptischen Drucksensoren, die von einer Achse der Reihe (20) radial beabstandet und im wesentlichen in der gleichen zu dieser Achse orthogonalen Ebene angeordnet sind,

Einrichtungen (40) zur Übertragung eines Aktivierungssignals zu den Sensoren und mit

Einrichtungen (42) zur Übertragung von Datensignalen von den Sensoren, dadurch gekennzeichnet, daß

mindestens drei der faseroptischen Sensoren (30, 32, 34, 31) mit ihren Achsen im wesentlichen entlang unterschiedlicher Radien der Reihe so angeordnet sind, daß Datensignale erzeugt werden, welche die Stärke des hydrostatischen Drucks repräsentierende DC-Komponente und AC-Komponenten enthalten, welche den von den seismischen Wellen bewirkten Drucktransienten entsprechen.

**Revendications**

1. Un procédé d'exploration sismique marine comprenant le remorquage dans une configuration sensiblement horizontale d'un élément allongé dans une masse d'eau, l'élément comprenant une pluralité de réseaux de capteurs disposés à l'intérieur et le long de celui-ci pour générer des données d'indication d'ondes sismiques, chaque réseau comprenant au moins trois capteurs décalés radialement dans ledit élément allongé dans des directions différentes, les capteurs de chaque réseau étant sensiblement dans un plan orthogonal à l'élément allongé, et le procédé comprenant en outre l'envoi de données sous forme de signaux électriques, caractérisé en ce que le procédé est exécuté au moyen de l'élément allongé remorqué dans la masse d'eau à une profondeur finie présélectionnée au dessus du fond de cette masse d'eau, les capteurs étant d'un type sensible à l'amplitude et à la direction de la pression qui leur est appliquée, de manière à générer des données dont les composantes à courant alternatif et à courant continu sont une indication des ondes sismiques et des pressions hydrostatiques ambiantes, respectivement, le procédé comprenant en outre la séparation des composantes à courant alternatif et à courant continu des données en signaux électriques et le traitement des signaux électriques pour calculer les composantes à courant alternatif et a courant continu pour déterminer la direction de propagation desdites ondes sismiques par rapport à l'espace tri-dimensionnel.

2. Procédé selon la revendication 1, dans lequel on utilise dans chaque réseau des capteurs de pression distribués de façon sensiblement uniforme autour de l'axe longitudinal dudit élément allongé.

3. Procédé selon la revendication 1 ou 2, dans lequel on utilise dans chaque réseau des capteurs de pression à fibres optiques (30, 32, 34) pour recevoir et moduler un faisceau lumineux monochromatique cohérent, ce qui donne ainsi une pluralité de faisceaux lumineux de sortie en réponse modulée aux variations de pression transitoire dues aux ondes sismiques et en réponse à la préssion hydrostatique.

4. Procédé selon la revendication 3, et comprenant la dérivation des composantes de signaux à courant alternatif représentatives desdites variations de pression transitoire en combinant séparément lesdits faisceaux lumineux modulés à un faisceau lumineux de référence, et pour chaque réseau de capteurs, la combinaison des faisceaux lumineux modulés entre eux pour dériver les composantes des signaux à courant continu représentant l'amplitude de la pression hydrostatique différentielle entre lesdits capteurs.

5. Procédé selon l'une quelconque des revendications 1 à 4 et comprenant la mesure des différences des temps d'arrivée horizontaux et verticaux des variations de pression transitoire à des capteurs sélectionnés, disposés horizontalement et radialement, constituant les réseaux de capteurs respectifs, et la combinaison desdites composantes à courant alternatif, desdites composantes à courant continu et desdits temps d'arrivée pour calculer la direction de propagation, dans l'espace tri-dimensionnel, des ondes sismiques détectées.

6. Appareil pour exécuter le procédé de l'une quelconque des précédentes revendications et comprenant un élément allongé (12) contenant un réseau de détecteurs (20) au moins, chaque réseau (20) comprenant au moins trois capteurs disposés radialement (30, 32, 34) pour générer des signaux de données relatifs aux ondes sismiques détectées, les capteurs (30, 32, 34, 36) du ou de chaque réseau (20) étant disposés dans différentes directions, sensiblement dans un plan orthogonal par rapport à l'élément allongé (12), des moyens (40) pour transmettre un signal de commande auxdits capteurs (30, 32, 34) et des moyens (42) pour transmettre des signaux de données des capteurs à un système d'enregistrement (22), caractérisé en ce que pour pouvoir être utilisés avec l'élément allongé remorqué dans une configuration sensiblement horizontale dans une masse d'eau, à une profondeur finie présélectionnée au dessus du fond de cette masse d'eau, les capteurs (30, 32, 34, 36) sont d'un type sensible à l'amplitude et à la direction de la pression qui leur est appliquée, de manière à pouvoir être actionnés pour produire des signaux de données en fonction de la pression hydrostatique différentielle et des transitoires de pression détectées dues aux ondes sismiques, l'appareil comprenant en outre des moyens (56, 62) pour séparer les signaux de données en composantes à courant continue électrique représentatives de la pression hydrostatique et en composantes à courant alternatif électrique représentatives des transitoires dues aux ondes sismiques, et des moyens (58) pour déterminer, à partir des composantes, la direction de propagation des ondes sismiques détectées par rapport à l'espace tri-dimensionnel.

7. Appareil selon la revendication 6, dans lequel une pluralité de réseaux de détecteurs sont espacés le long de l'axe longitudinal dudit élément allongé (12), chacun desdits réseaux (20) comprenant quatre capteurs à fibres optiques (30, 32, 34, 36), lesdits capteurs étant distribués uniformément autour de l'axe longitudinal dudit élément allongé (12) dans un plan sensiblement perpendiculaire à l'axe longitudinal dudit élément, lesdits moyens de transmission des signaux de commande (40) étant une fibre optique et lesdits moyens de transmission des signaux de données (42) comprenant une fibre optique au moins.

8. Appareil selon la revendication 7, et comprenant un laser (46) pour lancer un faisceau monochromatique cohérent de radiations dans les moyens de transmission (40) en vue d'être modulé par les capteurs des réseaux respectifs (20) en réponse aux variations de pression dues aux ondes sismiques et à la pression hydrostatique différentielle, des moyens de détection (56) du système d'enregistrement pour recevoir séparément les faisceaux lumineux modulés des capteurs respectifs (30, 32, 34, 36) de chaque réseau (20) par les moyens de transmission des données (42) et pour combiner lesdits faisceaux lumineux modulés à un faisceau lumineux de référence (54) pour déterminer les composantes des signaux à courant alternatif dudit faisceau lumineux modulé dues aux transitories de pression produites par les ondes sismiques.

9. Appareil selon la revendication 7 ou 8, comprenant des photodétecteurs (62, 66) pour combiner respectivement les faisceaux lumineux modulés d'une paire de capteurs (30 et 32) et d'une autre paire de capteurs (34 et 36) afin de déterminer les composantes à courant continu desdits faisceaux lumineux modulés représentatives de la pression hydrostatique différentielle aux capteurs respectifs.

10. Appareil selon l'une quelconque des revendications 7 à 9, dans lequel tous les capteurs de tous les réseaux respectifs (20) ont une source de rayonnement cohérent commun, chaque capteur étant agencé pour produire un faisceau de sortie modulé séparé, et lesdits moyens de transmission des données (42) comprenant un faisceau de fibres optiques séparées.

11. Appareil selon l'une quelconque des revendications 7 à 9, dans lequel tous les capteurs d'un réseau donné (20) ont une source de radiation commune, mais chaque jeu séparé a une source de rayonnement séparée, tous les capteurs de tous les réseaux étant agencés pour produire des faisceaux de sortie modulée séparés.

12. Appareil selon l'une quelconque des revendications 6 à 11, dans lequel ledit élément allongé (12) est un conteneur fermé contenant à l'intérieur un volume de fluide pour le couplage des capteurs montés intérieurement avec les variations de pression extérieure.

13. Réseau de capteurs (20) prévu pour être utilisé dans un appareil selon la revendication 6, le réseau de capteurs (20) comprenant des capteurs de pression du type à fibres optiques décalés radialement par rapport à un axe du réseau (20) et disposés sensiblement dans le même plan orthogonal audit axe, des moyens (40) pour transmettre un signal de commande aux capteurs et des moyens (42) pour transmettre des signaux de données desdits capteurs, caractérisé en ce que trois au moins desdits capteurs (30, 32, 34, 36) du type à fibres optiques sont disposés de façon que leurs axes s'étendent sensiblement le long de différents rayons du réseau, afin que lesdits capteurs produisent des signaux de données comprenant des composantes à courant continu représentatives de l'amplitude de la pression hydrostatique et des composantes à courant alternatif représentatives des transitoires dues aux ondes sismiques.

Fig. 1

Fig. 2

Fig. 3

Fig. 4